# EUROPEAN PATENT SPECIFICATION

(11) **EP 3 471 079 B1**
(45) Date of publication and mention of the grant of the patent: **27.05.2020**
(21) Application number: 18199208.2
(22) Date of filing: 08.10.2018
(51) Int. Cl.: G08G 5/00, H04B 7/185, H04W 4/44, H04L 29/06, H04W 12/08, H04L 29/08

(54) **SYSTEM AND METHOD FOR AIRCRAFT DATA LOADING USING CABIN GATEWAYS**
SYSTEM UND VERFAHREN ZUM LADEN VON FLUGZEUGDATEN UNTER VERWENDUNG VON KABINENGATEWAYS
SYSTÈME ET PROCÉDÉ DE CHARGEMENT DE DONNÉES D'AÉRONEF À L'AIDE DE PASSERELLES DE CABINE

(30) Priority: 11.10.2017 FR 1759537; 06.03.2018 US 201815913329
(43) Date of publication of application: 17.04.2019
(73) Proprietor: Honeywell International Inc., Morris Plains, NJ 07950 (US)
(72) Inventor: ROGERS, Carol, Morris Plains, NJ New Jersey 07950 (US); PETERSON, John, Morris Plains, NJ New Jersey 07950 (US); SHEPPARD, Adam, Morris Plains, NJ New Jersey 07950 (US); GOUDAL, Francois, Morris Plains, NJ New Jersey 07950 (US); SIMON, Petr, Morris Plains, NJ New Jersey 07950 (US)
(74) Representative: Houghton, Mark Phillip

(56) References cited:
- US-A1- 2008 119 968
- US-B1- 9 509 394
- US-B2- 9 189 655

## Description

### BACKGROUND

There is a need to regularly load data into vehicles such as aircraft, including database files, avionics configuration files, aircraft personality module (APM) files, loadable software airplane parts (LSAPs), and the like. Database files, in particular, are usually updated and loaded every fourteen days.

Older vehicles such as legacy aircraft typically do not have wireless access to the avionics for data loading. In such aircraft, data loading is provided through the cockpit using physical connections. File staging is done via manual processes, which are prone to errors and incorrect file transfers. For example, current procedures require maintenance personnel to transfer data from a portable memory device into the memory of an onboard data loading drive. The maintenance personnel then connect a laptop computer to the avionics system to initiate the data load.

Updating cockpit avionics in legacy aircraft with wireless gateways and automatic file staging solutions is very costly and time consuming. Accordingly, there is a need to find a way to automatically bring files to the aircraft and wirelessly load the files, without expensive updates to the cockpit avionics.

US9509394B1 discloses a system and method for implementing a security construct for downloading, delivering and protecting large amounts of data for transfer to an aircraft upload capability in a short period of time, including between individual legs of a flight for a particular aircraft or fleet of aircraft. Large data packages include In Flight Entertainment and Electronic Flight Bag data. The data is downloaded at an available rate using wired communication paths communicating with various data sources via communication networks to a mobile communication device. The data is secured in the mobile communication device according to particular encryption schemes acceptable to data content providers. The mobile communication device securely holds the data for carriage to the aircraft where wired communication is established to upload the data in available abbreviated amounts of time in a manner that is not dependent on the availability of wireless communicating bandwidth.

### SUMMARY

The present invention in its various aspects is as set out in the appended claims. A system and method for data loading in a vehicle is disclosed. The system comprises a cabin gateway onboard the vehicle, with the gateway including a data load software application module; an onboard switch and storage unit in operative communication with the gateway; and an onboard vehicle electronics unit in operative communication with the switch and storage unit. The gateway is configured to communicate with one or more wide area networks, and is configured to communicate with a portable device and a secure ground portal. The gateway is operative to initiate a remote transfer of data from one or more ground servers through the one or more wide area networks to the vehicle, and to store the data onboard the vehicle. The data load software application module in the gateway includes instructions, executable by a processor, for loading the stored data into the vehicle electronics unit.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a block diagram of a system for vehicle data loading using a cabin gateway, according to one embodiment;
Figure 2 is a block diagram of a system for aircraft data loading using a cabin gateway or router, according to another embodiment; and
Figure 3 is a flow diagram of an exemplary method for data loading in a vehicle.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A system and method for vehicle data loading such as aircraft data loading is disclosed. The system and method use cabin gateways such as passenger gateways to securely stage the data and provide a way to wirelessly load the data into the vehicle electronics such as avionics without a necessary investment in equipment upgrades such as in the cockpit.

The present system and method provide for staging and loading of certified data on certified avionics through non-certified devices such as a gateway device, and staging and loading of certified data on non-certified avionics such as a gateway device. The present system and method can also be adapted to support the download of information from an aircraft.

The present approach can significantly reduce maintenance costs, and aircraft downtime. For example, cabin avionics are typically a lower Design Assurance Level (DAL) (e.g., DAL E) and as such, software development, updates, and the like are significantly less expensive than a DAL for a cockpit (e.g. DAL D and above).

Further details of the system and method are described hereafter with reference to the drawings.

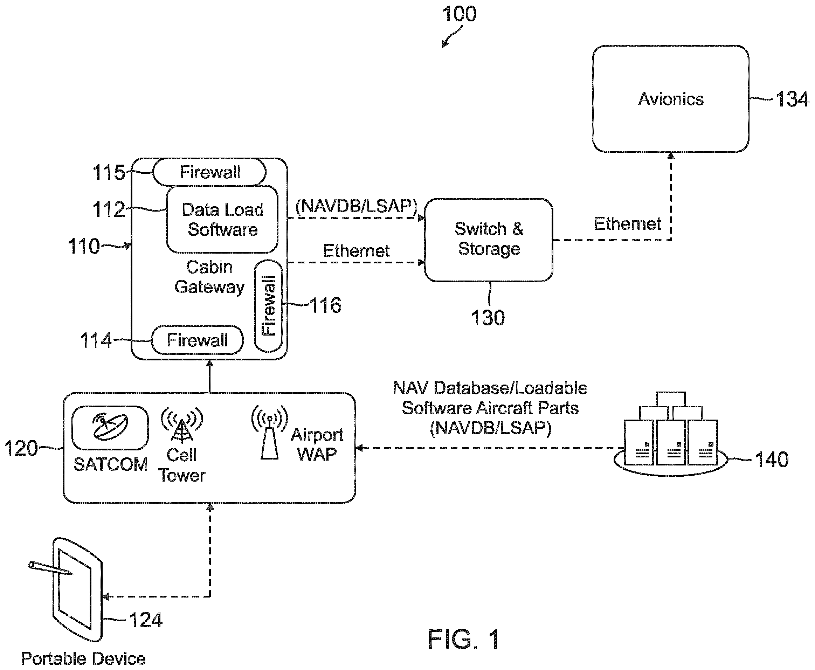

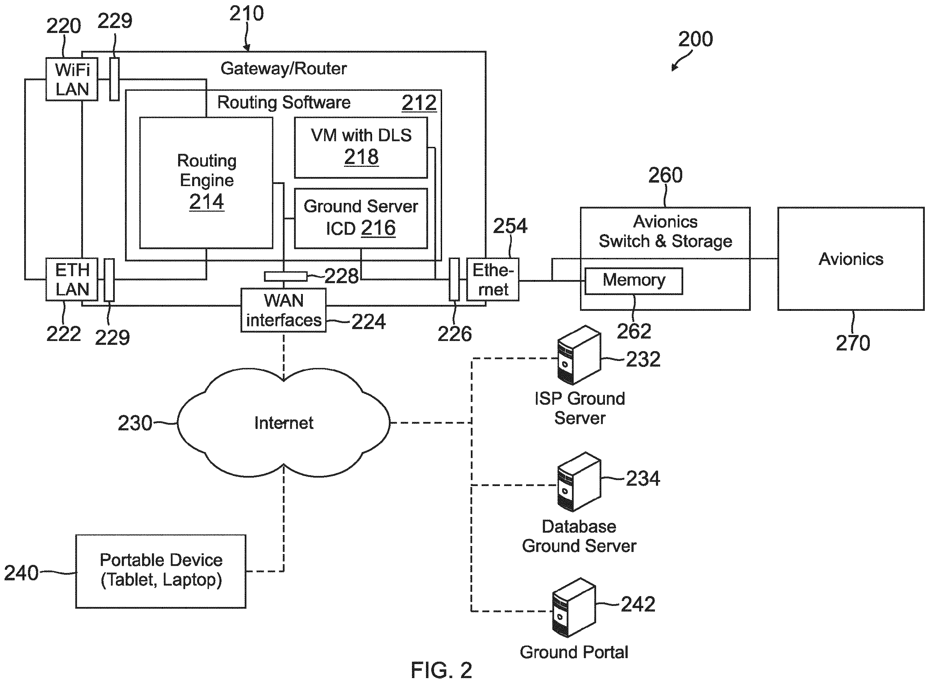

Figure 1 illustrates a system 100 for data loading in a vehicle such as an aircraft, according to one embodiment. The system 100 includes a cabin gateway 110, which includes a data load software application module 112. The cabin gateway 110 operatively communicates with one or more wide area networks (WANs) 120, such as a satellite communications (SATCOM) network, a cellular network, an airport wireless application protocol (WAP) network, the Internet, or the like. In addition, cabin gateway 110 is configured to communicate with a portable device 124 such as a tablet or laptop computer through WANs 120. The cabin gateway 110 is also configured to communicate with a secure ground portal such as ground portal 242 (Fig. 2) through WANs 120. The secure ground portal is controllable by portable device 124 through WANs 120.

The cabin gateway 110 includes a first firewall 114 configured to provide appropriate security measures for communications with WANs 120, a second firewall 115 configured to provide appropriate security measures for a local area network (LAN) such as a Wi-Fi LAN. An onboard switch and storage unit 130 operatively communicates with cabin gateway 110, such as through an Ethernet connection secured by a third firewall 116. An onboard vehicle electronics unit such as an avionics unit 134 operatively communicates with switch and storage unit 130, such as through an Ethernet connection.

During operation of system 100, a user selects the data to be loaded by using the ground portal via portable device 124, which communicates the selection to cabin gateway 110. The cabin gateway 110 communicates with one or more ground servers 140 through the one or more WANs 120, and initiates a remote data transfer of the selected data back to cabin gateway 110. When the vehicle is an aircraft, the remote data transfer is only allowed when aircraft weight on wheels (WoW) and/or a maintenance switch is enabled. The transferred data, such as a navigation (NAV) database (DB) or loadable software aircraft parts (LSAP), is stored (staged) onboard for data loading at a later time (or immediately). For example, the data can be stored in cabin gateway 110 or on switch and storage unit 130 with appropriate security measures being taken. The data loading can then be initiated by a user from portable device 124 while the aircraft weight on wheels (WoW) and/or the maintenance switch is enabled. The data load software application module 112 in cabin gateway 110 includes instructions, executable by a processor, for loading the stored data into avionics unit 134.

Figure 2 illustrates a system 200 for data loading in an aircraft, according to another embodiment. The system 200 includes a cabin network gateway/router 210, which includes a routing software application module 212 that operatively communicates with various data sources and devices. The routing software application module 212 includes a routing engine 214, a ground server interface control document (ICD) 216, and a virtual machine (VM) 218 with data loading software (DLS). The routing software application module 212 provides for communication between a cabin LAN, such as a Wi-Fi LAN 220 and an Ethernet (ETH) LAN 222, and wide area network (WAN) interfaces 224, through routing engine 214.

The routing software application module 212 communicates through WAN interfaces 224 with various ground servers through a WAN 230 such as the Internet, for example. Exemplary ground servers include an Internet service provider (ISP) ground server 232, a database ground server 234, and the ground portal 242. In addition, routing software application module 212 is configured to communicate with a portable device 240, such as a tablet or laptop computer, through a WAN interfaces 224.

The gateway/router 210 also includes a first firewall 226 configured to provide appropriate security measures for communications with an avionics switch and storage unit 260, and a second firewall 228 configured to provide appropriate security measures for communications through WAN interfaces 224. A third firewall 229 is configured to provide appropriate security measures for communications through WiFi LAN 220 and ETH LAN 222. The gateway/router 210 can also implement software resource partitioning.

An onboard avionics switch and storage unit 260, such as a data LAN management unit (DLMU), operatively communicates with gateway/router 210, such as through an Ethernet connection 254, and includes at least one memory device 262. An onboard avionics unit 270 operatively communicates with switch and storage unit 260, such as through an Ethernet connection.

During operation of system 200, a user selects the data to be loaded by using ground portal 242 via portable device 240 connected to the Internet, which communicates the selection to routing software application module 212, which in turn pings ISP ground server 232 or database ground server 234 to initiate a remote data transfer of the selected data back to gateway/router 210. The remote data transfer is only allowed when the aircraft weight on wheels (WoW) and/or maintenance switch is enabled. The transferred data is stored (staged) onboard the aircraft in memory device 262 of switch and storage unit 260 after passing through ground server ICD 216. The data loading can then be initiated by a user from portable device 240 any time after storing the data. The data loading software in virtual machine 218 includes instructions, executable by a processor, for loading the stored data into avionics unit 270 after receiving a command from portable device 240 to load the data. A validation of the data loading is then performed such as with conventional techniques.

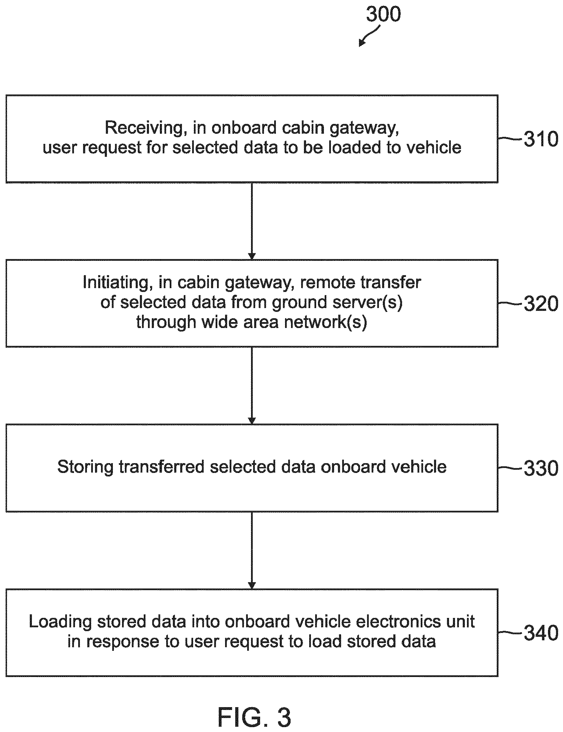

Figure 3 is a flow diagram of an exemplary method 300 for data loading in a vehicle such as an aircraft. The method 300 includes receiving, in an onboard cabin gateway, a user request for selected data to be loaded to the vehicle (block 310). The method 300 then initiates, in the cabin gateway, a remote transfer of the selected data from one or more ground servers through one or more WANs (block 320). The transferred selected data is then stored onboard the vehicle (block 330). The stored data can them be loaded into an onboard vehicle electronics unit, such as an avionics unit, in response to a user request to load the stored data (block 340). The user requests for selected data and to load the data can be received from a portable device with a secure ground portal.

A processor used in the present system can be implemented using software, firmware, hardware, or any appropriate combination thereof, as known to one of skill in the art. These may be supplemented by, or incorporated in, specially-designed application-specific integrated circuits (ASICs) or field programmable gate arrays (FPGAs). The computer or processor can also include functions with software programs, firmware, or other computer readable instructions for carrying out various process tasks, calculations, and control functions used in the present method and system.

The present method can be implemented by computer executable instructions, such as program modules or components, which are executed by at least one processor. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer- or processor-readable instructions. These instructions are typically stored on any appropriate computer program product that includes a computer readable medium used for storage of computer readable instructions or data structures. Such a computer readable medium can be any available media that can be accessed by a general purpose or special purpose computer or processor, or any programmable logic device.

Suitable processor-readable media may include storage or memory media such as magnetic or optical media. For example, storage or memory media may include conventional hard disks, compact disks, or other optical storage disks; volatile or nonvolatile media such as Random Access Memory (RAM); Read Only Memory (ROM), Electrically Erasable Programmable ROM (EEPROM), flash memory, and the like; or any other media that can be used to carry or store desired program code in the form of computer executable instructions or data structures.

## Claims

1. A system for data loading in a vehicle, the system comprising:
an onboard vehicle electronics unit (134);
an onboard switch and storage unit (130) in operative communication with the onboard vehicle electronics unit (134); and
a cabin gateway (110) onboard the vehicle in operative communication with the onboard switch and storage unit (130) and capable of operative communication with a portable device (124) and one or more wide area networks (120), the cabin gateway (110) executing instructions to perform a process to:
receive a data selection from the portable device (124) in response to a first user input on the portable device (124) when the cabin gateway (110) is in operative communication with the portable device (124),
initiate a remote data transfer of data corresponding to the data selection from one or more ground servers (140) through the one or more wide area networks (120) to the vehicle,
store the data corresponding to the data selection in a memory of the cabin gateway (110) or the onboard switch and storage unit (130),
after storing the data corresponding to the data selection, receive a data load instruction from the portable device (124) in response to a second user input on the portable device (124) when the cabin gateway (110) is in operative communication with the portable device (124), and
in response to receiving the data load instruction, cause the stored data to be loaded into the vehicle electronics unit (134).

2. The system of claim 1, wherein the vehicle comprises an aircraft, and the vehicle electronics unit (134) comprises an avionics unit.

3. The system of claim 1, wherein the cabin gateway (110) includes
a first firewall (114) configured to provide security measures for communications with the one or more wide area networks (120),
a second firewall (115) configured to provide security measures for communications with a local area network (LAN), and
a third firewall (116) configured to provide security measures for communications with the switch and storage unit (130).

4. The system of claim 1, wherein:
the switch and storage unit (130) is in operative communication with the cabin gateway (110) through an Ethernet connection; and
the vehicle electronics unit (134) is in operative communication with the switch and storage unit (130) through an Ethernet connection.

5. The system of claim 1, wherein the one or more wide area networks (120) comprise a satellite communications (SATCOM) network, a cellular network, an airport wireless application protocol (WAP) network, or Internet.

6. A method for data loading in a vehicle executed by a cabin gateway (110) of a system onboard the vehicle, the system including an onboard vehicle electronics unit (134), an onboard switch and storage unit (130) in operative communication with the onboard vehicle electronics unit (134), and the cabin gateway (110) in operative communication with the onboard switch and storage unit (130) and capable of operative communication with a portable device (124) and one or more wide area networks (120), the method comprising:
receiving a data selection from the portable device (124) in response to a first user input on the portable device (124) when the cabin gateway (110) is in operative communication with the portable device (124),
initiating a remote data transfer of data corresponding to the data selection from one or more ground servers (140) through the one or more wide area networks (120) to the vehicle,
storing the data corresponding to the data selection in a memory of the cabin gateway (110) or the onboard switch and storage unit (130),
after storing the data corresponding to the data selection, receiving a data load instruction from the portable device (124) in response to a second user input on the portable device (124) when the cabin gateway (110) is in operative communication with the portable device (124), and
in response to receiving the data load instruction, causing the stored data to be loaded into the vehicle electronics unit (134).

7. The method of claim 6, wherein the remote data transfer of the data corresponding to the data selection is initiated when aircraft weight on wheels or a maintenance switch is enabled.

8. The method of claim 6, wherein the first user input is received from a secure ground portal controlled by the portable device (124).

## Patentansprüche

1. System zum Laden von Daten in ein Fahrzeug, wobei das System Folgendes umfasst:
eine fahrzeugeigene Elektronikeinheit (134);
einen fahrzeugeigenen Schalt- und eine Speichereinheit (130), die in Wirkverbindung mit der fahrzeugeigenen Elektronikeinheit (134) steht; und
ein fahrzeugeigenes Kabinengateway (110), das in Wirkverbindung mit der fahrzeugeigenen Schalt- und Speichereinheit (130) steht und in der Lage ist, mit einer tragbaren Vorrichtung (124) und einem oder mehreren Weitverkehrsnetzen (120) wirksam zu kommunizieren, wobei das Kabinengateway (110) Anweisungen zur Durchführung eines Vorgangs ausführt zum:
Empfangen einer Datenauswahl von der tragbaren Vorrichtung (124) als Reaktion auf eine erste Benutzereingabe an der tragbaren Vorrichtung (124), wenn das Kabinengateway (110) in Wirkverbindung mit der tragbaren Vorrichtung (124) steht,
Einleiten einer Datenfernübertragung von Daten entsprechend der Datenauswahl von einem oder mehreren Bodenservern (140) über das eine oder die mehreren Weitverkehrsnetze (120) zum Fahrzeug,
Speichern der Daten entsprechend der Datenauswahl in einem Speicher des Kabinengateways (110) oder der fahrzeugeigenen Schalt- und Speichereinheit (130),
nach dem Speichern der Daten entsprechend der Datenauswahl, Empfangen einer Datenladeanweisung von der tragbaren Vorrichtung (124) als Reaktion auf eine zweite Benutzereingabe an der tragbaren Vorrichtung (124), wenn das Kabinengateway (110) in Wirkverbindung mit der tragbaren Vorrichtung (124) steht, und
als Reaktion auf das Empfangen der Datenladeanweisung, Veranlassen, dass die gespeicherten Daten in die Fahrzeugelektronikeinheit (134) geladen werden.

2. System nach Anspruch 1, wobei das Fahrzeug ein Flugzeug umfasst und die Fahrzeugelektronikeinheit (134) eine Avionikeinheit umfasst.

3. System nach Anspruch 1, wobei das Kabinengateway (110) Folgendes beinhaltet eine erste Firewall (114), die so konfiguriert ist, dass sie Sicherheitsmaßnahmen für die Kommunikation mit einem oder mehreren Weitverkehrsnetzen (120) bereitstellt,
eine zweite Firewall (115), die so konfiguriert ist, dass sie Sicherheitsmaßnahmen für die Kommunikation mit einem lokalen Netzwerk (LAN) bereitstellt, und
eine dritte Firewall (116), die so konfiguriert ist, dass sie Sicherheitsmaßnahmen für die Kommunikation mit der Schalt- und Speichereinheit (130) bereitstellt.

4. System nach Anspruch 1, wobei:
die Schalt- und Speichereinheit (130) über eine Ethernet-Verbindung in Wirkverbindung mit dem Kabinengateway (110) steht; und
die Fahrzeugelektronikeinheit (134) über eine Ethernet-Verbindung in Wirkverbindung mit der Schalt- und Speichereinheit (130) steht.

5. System nach Anspruch 1, wobei das eine oder die mehreren Weitverkehrsnetze (120) ein Satellitenkommunikationsnetz (SATCOM), ein Mobilfunknetz, ein WAP-Netzwerk (Airport Wireless Application Protocol) oder Internet umfassen.

6. Verfahren zum Laden von Daten in ein Fahrzeug, das von einem Kabinengateway (110) eines fahrzeugeigenen Systems ausgeführt wird, wobei das System eine fahrzeugeigene Elektronikeinheit (134), einen fahrzeugeigenen Schalt- und Speichereinheit (130) in Wirkverbindung mit der fahrzeugeigenen Elektronikeinheit (134) und das Kabinengateway (110) in Wirkverbindung mit dem fahrzeugeigenen Schalter und der Speichereinheit (130) aufweist und in der Lage ist, mit einer tragbaren Vorrichtung (124) und einem oder mehreren Weitverkehrsnetzen (120) zu kommunizieren, wobei das Verfahren umfasst:
Empfangen einer Datenauswahl von der tragbaren Vorrichtung (124) als Reaktion auf eine erste Benutzereingabe in die tragbare Vorrichtung (124), wenn das Kabinengateway (110) in Wirkverbindung mit der tragbaren Vorrichtung (124) steht,
Einleiten einer Datenfernübertragung von Daten entsprechend der Datenauswahl von einem oder mehreren Bodenservern (140) über das eine oder die mehreren Weitverkehrsnetze (120) zum Fahrzeug,
Speichern der Daten entsprechend der Datenauswahl in einem Speicher des Kabinengateways (110) oder der fahrzeugeigenen Schalt- und Speichereinheit (130),
nach dem Speichern der Daten entsprechend der Datenauswahl, Empfangen einer Datenladeanweisung von der tragbaren Vorrichtung (124) als Reaktion auf eine zweite Benutzereingabe in der tragbaren Vorrichtung (124), wenn das Kabinengateway (110) in Wirkverbindung mit der tragbaren Vorrichtung (124) steht, und
in Reaktion auf das Empfangen des Datenladebefehls, Veranlassen, dass die gespeicherten Daten in die Fahrzeugelektronikeinheit (134) geladen werden.

7. Verfahren nach Anspruch 6, wobei die Datenfernübertragung der Daten entsprechend der Datenauswahl eingeleitet wird, wenn das Flugzeuggewicht auf Rädern oder ein Wartungsschalter aktiviert wird.

8. Verfahren nach Anspruch 6, wobei die erste Benutzereingabe von einem sicheren Bodenportal empfangen wird, das von der tragbaren Vorrichtung (124) gesteuert wird.

## Revendications

1. Système de chargement de données dans un véhicule, ledit système comprenant :
une unité électronique de véhicule (134) embarquée ;
une unité de commutation et de mémorisation (130) embarquée en communication opérationnelle avec l'unité électronique de véhicule (134) embarquée ; et
une passerelle de cabine (110) embarquée sur le véhicule en communication opérationnelle avec l'unité de commutation et de mémorisation (130) embarquée et apte à la communication opérationnelle avec un dispositif (124) portatif et au moins un réseau étendu (120), la passerelle de cabine (110) exécutant des instructions pour effectuer un traitement :
pour recevoir une sélection de données du dispositif (124) portatif en réponse à une première entrée utilisateur sur le dispositif (124) portatif lorsque la passerelle de cabine (110) est en communication opérationnelle avec le dispositif (124) portatif,
pour lancer un transfert de données à distance des données correspondant à la sélection de données d'au moins un serveur (140) terrestre par l'intermédiaire de l'au moins un réseau étendu (120) vers le véhicule,
pour mémoriser les données correspondant à la sélection de données dans une mémoire de la passerelle de cabine (110) ou de l'unité de commutation et de mémorisation (130) embarquée,
pour recevoir, après la mémorisation des données correspondant à la sélection de données, une instruction de chargement de données du dispositif (124) portatif en réponse à une deuxième entrée utilisateur sur le dispositif (124) portatif lorsque la passerelle de cabine (110) est en communication opérationnelle avec le dispositif (124) portatif et
pour amener, en réponse à la réception de l'instruction de chargement de données, les données mémorisées à être chargées dans l'unité électronique de véhicule (134).

2. Système selon la revendication 1, dans lequel le véhicule est constitué d'un aéronef et l'unité électronique de véhicule (134) est constituée d'une unité avionique.

3. Système selon la revendication 1, dans lequel la passerelle de cabine (110) comprend
un premier pare-feu (114) conçu pour fournir des mesures de sécurité pour les communications avec l'au moins un réseau étendu (120),
un deuxième pare-feu (115) conçu pour fournir des mesures de sécurité pour les communications avec un réseau local (LAN) et
un troisième pare-feu (116) conçu pour fournir des mesures de sécurité pour les communications avec l'unité de commutation et de mémorisation (130).

4. Système selon la revendication 1, dans lequel :
l'unité de commutation et de mémorisation (130) est en communication opérationnelle avec la passerelle de cabine (110) par l'intermédiaire d'une connexion Ethernet ; et
l'unité électronique de véhicule (134) est en communication opérationnelle avec l'unité de commutation et de mémorisation (130) par l'intermédiaire d'une connexion Ethernet.

5. Système selon la revendication 1, dans lequel l'au moins un réseau étendu (120) comprend un réseau de communications par satellite (SATCOM), un réseau cellulaire, un réseau de protocole d'application sans fil (WAP) d'aéroport ou Internet.

6. Procédé de chargement de données dans un véhicule exécuté par une passerelle de cabine (110) d'un système embarqué sur le véhicule, ledit système comprenant une unité électronique de véhicule (134) embarquée, une unité de commutation et de mémorisation (130) embarquée en communication opérationnelle avec l'unité électronique de véhicule (134) embarquée et la passerelle de cabine (110) en communication opérationnelle avec l'unité de commutation et de mémorisation (130) embarquée et apte à la communication opérationnelle avec un dispositif (124) portatif et au moins un réseau étendu (120), ledit procédé consistant :
à recevoir une sélection de données du dispositif (124) portatif en réponse à une première entrée utilisateur sur le dispositif (124) portatif lorsque la passerelle de cabine (110) est en communication opérationnelle avec le dispositif (124) portatif,
à lancer un transfert de données à distance des données correspondant à la sélection de données d'au moins un serveur (140) terrestre par l'intermédiaire de l'au moins un réseau étendu (120) vers le véhicule,
à mémoriser les données correspondant à la sélection de données dans une mémoire de la passerelle de cabine (110) ou l'unité de commutation et de mémorisation (130) embarquée,
à recevoir, après la mémorisation des données correspondant à la sélection de données, une instruction de chargement de données du dispositif (124) portatif en réponse à une deuxième entrée utilisateur sur le dispositif (124) portatif lorsque la passerelle de cabine (110) est en communication opérationnelle avec le dispositif (124) portatif et
à amener, en réponse à la réception de l'instruction de chargement de données, les données mémorisées à être chargées dans l'unité électronique de véhicule (134).

7. Procédé selon la revendication 6, dans lequel le transfert de données à distance des données correspondant à la sélection de données est lancé lorsque l'aéronef repose sur les roues ou qu'un commutateur de maintenance est activé.

8. Procédé selon la revendication 6, dans lequel la première entrée utilisateur est reçue d'un portail terrestre sécurisé commandé par le dispositif (124) portatif.
